(19)

Europäisches
Patentamt
European
Patent Office
Office européen
des brevets

(11) **EP 1 927 400 A1**

(12) **EUROPEAN PATENT APPLICATION**

(43) Date of publication:
**04.06.2008 Bulletin 2008/23**

(21) Application number: **07121893.7**

(22) Date of filing: **29.11.2007**

(51) Int Cl.:
*B01J 23/10* (2006.01)     *B01J 23/63* (2006.01)
*B01J 23/83* (2006.01)     *B01J 23/887* (2006.01)
*B01J 35/06* (2006.01)

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **01.12.2006 JP 2006325121
30.07.2007 JP 2007197764**

(71) Applicant: **Nissan Motor Co., Ltd.
Kanagawa 221-0023 (JP)**

(72) Inventors:
• **Ito, Junji**
c/o Nissan Motor Co.,Ltd
**Atsugi-shi, Kanagawa 243-0123 (JP)**

• **Yamauchi, Takeshi**
c/o Nissan Motor Co.,Ltd
**Atsugi-shi, Kanagawa 243-0123 (JP)**
• **Miyamura, Toshiharu**
c/o Nissan Motor Co.,Ltd
**Atsugi-shi, Kanagawa 243-0123 (JP)**
• **Takaya, Masahiro**
c/o Nissan Motor Co.,Ltd
**Atsugi-shi, Kanagawa 243-0123 (JP)**

(74) Representative: **Holmes, Matthew William et al
Nissan Motor Manufacturing (UK) Ltd
Intellectual Property Department
Nissan Technical Centre Europe
Cranfield Technology Park
Cranfield, Bedfordshire MK43 0DB (GB)**

(54) **Fibrous Catalyst**

(57)    Herein is provided a fibrous catalyst having a catalytic layer containing particles comprising ceria $CeO_2$, with an average particle size of 1nm to $1\mu$m. The layer is coated on the surface of a ceramic fiber. Accordingly, flexibility of the surface of the catalytic layer is improved due to the decreased interaction between the particles due to their minute size. Because flexibility is improved, vibration and deformation does not deteriorate the layer, and as such, the peeling-resistance property is improved.

**EP 1 927 400 A1**

**Description**

The invention relates in general to a fibrous catalyst wherein a catalyst is carried on a surface of a fibrous ceramic. Aspects of the invention relate to a catalyst, to a method, to an exhaust system and to a vehicle.

In recent years, the number of automobiles has increased remarkably, and proportionally the amount of exhaust gas discharged from the internal combustion engines of the automobile has increased. Because various materials contained in the exhaust gas of diesel engines cause pollution, the global environment is being affected. Moreover, in recent years, there are reported findings that particulates such as soot contained in the exhaust gas cause allergies and asthma as well as impairing sperm count in men. Measures to remove the particulates in the exhaust gas are desirable.

Conventionally, purifying filters are used to remove particulates such as hydrocarbon (HC), carbon monoxide (CO) and nitrogen oxide (NOx). A catalytic coat layer is formed on a surface of a catalyst carrier made of ceramic fibrous material, and this catalytic coat layer carries the catalyst made of noble metals such as Pt, Pd and Rh and alkali metal, and so on. The catalytic carrier is impregnated by a slurry including alumina powder and then dried and fired to form the catalytic coat layer on the surface of the catalyst carrier. By this purifying filter, when the exhaust gas passes though the purifying filter, it is possible to effectively perform oxidation removal of the carbon monoxide and the hydrocarbon, and also reduce the nitrogen oxide.

To improve the carrying strength of such a catalyst carrier, in general, a method is known to impregnate a silica gel and then heat the carrier and silica gel by a predetermined temperature. By applying this method, the water content in the silica sol is evaporated by the heating to form porous gel, including particulates of the silica. Accordingly, it is possible to strengthen the catalyst by this filling effect. This method is described in Japanese Patent Application Publication No. 55-155740.

Such conventional methods are effective for catalyst carriers that are not exposed to mechanical stresses. Even where a ceramic fiber material is used as a catalyst carrier, the carrier cannot be impregnated using a slurry due to its smooth surface. Because of surface tension, the catalyst layer is unevenly distributed across the ceramic fibrous material. This uneven coat decreases the catalytic activity.

It is an aim of the invention to address this issue and to improve upon known technology. Embodiments of the invention may provide a fibrous catalyst carrier in which the catalytic coat layer strongly adheres to the ceramic fiber material of the carrier, preventing the catalyst components from peeling off of the fibrous carrier and improving coating consistency.

It has been discovered that this goal can be attained using ceria-containing particles contained in the catalyst coat layer, those particles having a nano level particle size. The ceria-containing particles contained in the catalytic layer coated on the surface of the ceramic fiber have average particle sizes in the range of 1nm to 1$\mu$m. Accordingly, it is possible to increase adhesive force of the catalytic layer to the surface of the ceramic fiber catalyst carrier, to prevent the catalytic components from peeling off from the carrier, and to improve durable life of the fibrous catalyst.

Other aims and advantages of the invention will become apparent from the following description, claims and drawings.

Aspects of the invention therefore provide a catalyst, a method, an exhaust system and a vehicle as claimed in the appended claims.

According to another aspect of the invention for which protection is sought there is provided a fibrous catalyst comprising a ceramic fiber carrier and a catalyst layer coated on the ceramic fiber carrier, the catalyst layer including ceria-containing particles having an average particle size of between 1nm and 1$\mu$m.

In an embodiment, the catalyst layer further comprises an active catalyst material.

In an embodiment, the ceria-containing particles contact the ceramic fiber carrier and are disposed between the ceramic fiber carrier and the active catalyst material, and are disposed between individual particles of the active catalyst material.

In an embodiment, the active catalyst material comprises at least one of a noble metal, a transition metal and a rare earth metal.

In an embodiment, the catalyst layer has an adhesive strength resisting bending to at least a radius of curvature of 10mm and at least a bending angle of 90°.

In an embodiment, the ceria-containing particles comprise an inorganic oxide.

In an embodiment, the ceria-containing particles comprise cerium oxide.

In an embodiment, the ceria-containing particles comprise at least one of a ceria-praseodymium and a ceria-manganese.

In an embodiment, the ceramic fiber carrier comprises an aggregation of fibers.

In an embodiment, the fibrous catalyst is an exhaust gas purifying catalyst for purifying an exhaust gas discharged from an internal combustion engine.

According to a still further aspect of the invention for which protection is sought there is provided a method of preparing a fibrous catalyst to withstand mechanical stresses, the method comprising mixing a sol of ceria and active catalyst material, spraying the sol on a ceramic fiber carrier until an entire surface of the ceramic fiber carrier has an even coat, drying the coated ceramic fiber carrier and firing the ceramic fiber carrier.

In an embodiment, the coat has a thickness of 1μm.

In use, an exhaust gas purifying filter provided with a catalyst carrier made of a ceramic fiber material used for purifying the exhaust gas of a diesel engine may be received in a casing provided in an exhaust pipe through which the exhaust gas is discharged from the internal combustion engine. The exhaust gas discharged from the internal combustion engine passes through the purifying filter, and the particulates contained in that exhaust gas are removed.

For example, one such catalyst may include a ceramic fiber carrier and a catalyst layer coated on the ceramic fiber carrier, the catalyst layer including ceria-containing particles having an average particle size of between 1 nm and 1μm.

In another example, a method of preparing a fibrous catalyst capable of withstanding mechanical stresses may comprise mixing a sol of ceria and active catalyst material, spraying the sol on a ceramic fiber carrier until an entire surface of the ceramic fiber carrier has an even coat, drying the coated ceramic fiber carrier and firing the ceramic fiber carrier.

Within the scope of this application it is envisaged that the various aspects, embodiments, examples, features and alternatives set out in the preceding paragraph, in the claims and/or in the following description and drawings may be taken individually or in any combination thereof.

The present invention will now be described, by way of example only, with reference to the accompanying drawings in which:

FIG. 1 is an electron micrograph showing an appearance of a fibrous catalyst obtained by Example 1;

FIG. 2 is an electron micrograph showing an appearance of a fibrous catalyst obtained by Example 2;

FIG. 3 is an electron micrograph showing an appearance of a fibrous catalyst obtained by Example 3;

FIG. 4 is a photograph showing a bending test method used in the Examples;

FIG. 5 is an electron micrograph showing an appearance of the fibrous catalyst obtained by Example 1 after the bending test;

FIG. 6 is an electron micrograph showing an appearance of the fibrous catalyst obtained by Example 2 after the bending test;

FIG. 7 is an electron micrograph showing an appearance of the fibrous catalyst obtained by Example 3 after the bending test;

FIG. 8 is a transmission electron micrograph showing a section of texture of the fibrous catalyst obtained by Example 2;

FIG. 9 is a transmission electron micrograph showing a section of texture of the fibrous catalyst obtained by Comparative Example 2;

FIG. 10 is an illustrative view showing an observation direction in FIGS 8 and 9;

FIG. 11 is an illustrative diagrammatic view showing a measuring method of particulate matter collection;

FIG. 12 is an illustrative view showing a relationship between a particulate matter collection amount with presence and absence of the catalytic layer; and

FIG. 13 is a graph showing a relationship between a catalyst temperature and a particulate matter removal ratio in the fibrous catalyst of Example 3.

Hereinafter, fibrous catalysts according to the invention are illustrated more in detail. In this description, a percentage represents percent by mass if not otherwise specified.

In the fibrous catalysts embodied herein, a catalytic layer containing particles comprising ceria, such as $CeO_2$, having an average particle size of 1nm to 1μm is coated on the surface of the ceramic fiber. Accordingly, flexibility of the surface of the catalytic layer is improved due to the decreased interaction between the particles due to their minute size. Because flexibility is improved, vibration and deformation does not deteriorate the layer, and as such, the peeling-resistance property is improved.

In the fibrous catalyst disclosed herein, the ceramic fiber serving as the catalyst carrier is not limited to particular fibers. For example, fibers including one or more of alumina ($Al_2O_3$), zirconia ($ZrO_2$), titania ($TiO_2$), or silica ($SiO_2$) may be used. These materials have a specific surface area and accordingly are optimal as ceramic fibers for carrying catalyst components because the radius of the ceramic fibers is more important than the thinness as far as optimizing the physical surface area. These ceramic fiber materials may be used as filaments or configured in the aggregate, such as in woven or non-woven fabrics, felt and paper made of the ceramic fiber.

In the fibrous catalyst described herein, a sol comprising the ceria-containing particles has an average particle size of 1nm to 1$\mu$m. By using the minute sol as the catalyst component, the mechanical strength is increased, the coat layer is thinner, and the filling density of the fiber is improved. In certain embodiments, the thickness (size) of the ceramic fiber is about 1 to 50$\mu$m.

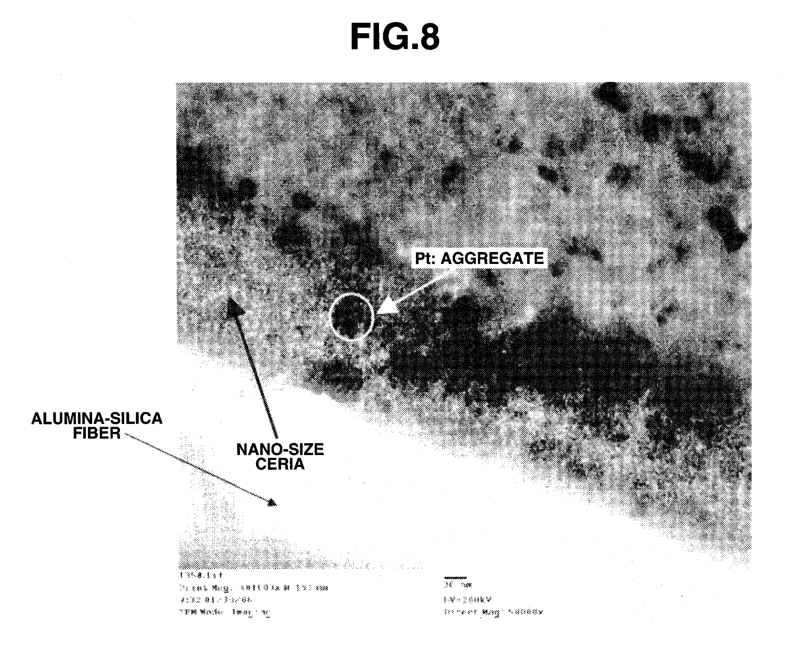

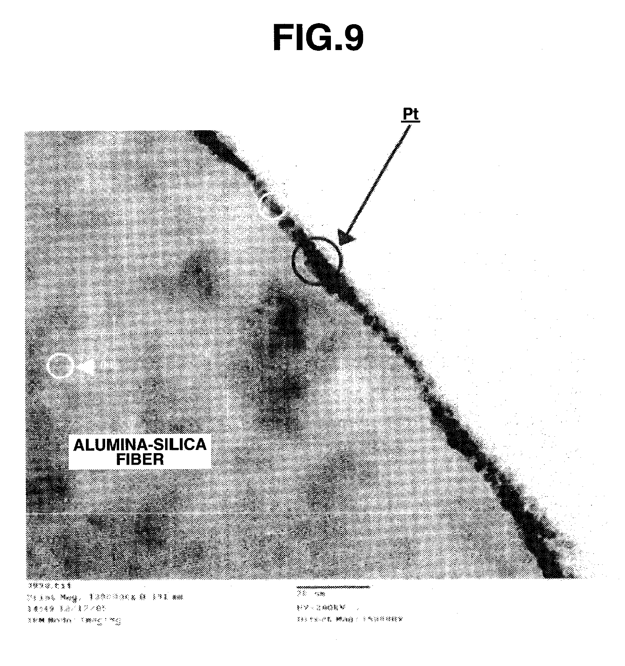

The active catalyst material used in the fibrous catalyst embodiments disclosed may be, for example, metals that include noble metals, transition metals and rare earth metals. In certain embodiments, optimum coating adhesion results when the ceria particles are intervened between the platinum particles while abutted directly to the ceramic fiber. The positioning of the ceria particles on the ceramic fibers and between the fibers and the active catalyst material provides excellent adhesion of the catalyst coat layer, impeding the peeling of the coat due to mechanical stresses. According, in embodiments where the distance between individual active catalyst particles is wider than the ceria-containing particle size, particularly desirable adhesion properties result.. This distribution can be seen in FIGS. 8 and 9.

In certain embodiments, the ceria-containing particles are a ceria-praseodymium or a ceria-manganese. It has been found that a sol not including Ce02 tends to decrease in surface area after being coated on the carrier and fired, whereas the use with Ce02 highly disperses the praseodymium and the manganese. That is, the ceria particles act as a toughening agent. Moreover, the ceria is also beneficial as an active oxygen discharging agent and as a promoter. Accordingly, the catalyst capability is remarkably improved by the use of ceria.

The fibrous catalyst disclosed herein is applicable to, for example, purifying an exhaust gas discharged from an internal combustion engine of automobile. In view of this use, it is desirable that the catalyst layer is sufficiently adhered to the ceramic fiber carrier so that active catalyst is not lost due to peeling-off of the layer from the fibrous material. It is further desirable that the ceramic fiber itself is not broken even in the case of bending to a radius of curvature of 10mm and an angle of 90°.

Hereinafter, the invention is illustrated more in detail based on examples. However, the invention is not limited only to these examples.

A first example utilizes a ceria-containing particle with ceria sol concentration of 15 percent by mass and an average particle size of 5nm. This solution was inserted into a sprayer and sprayed on an alumina-silica fiber having an average fiber length of 3mm and an average fiber radius of 15$\mu$m until the entire surface is evenly colored. Such a finer is manufactured by, for example, Nitivy Co. Ltd.. The fibrous catalyst of Example 1 was dried at 120°C for 1 hour and fired at 400°C for 1 hour. Consequently, a catalyst layer having a thickness of 1$\mu$m was formed on the surface of the fiber.

The same process as described above was repeated for manufacturing a second example with an alternate ceria-containing particle. The ceria-containing particle used in the second embodiment is a solution of dinitrodiammine platinum, the concentration of the solution being 0.3 percent by mass. After drying the fibrous catalyst at 120°C for 1 hour and firing at 400°C for 1 hour, the fibrous catalyst of Example 2 was obtained with a thickness of the catalyst layer of 1$\mu$m.

The same process as described above was repeated for manufacturing a third example with an alternate ceria-containing particle. The ceria-containing particle used in the third example is a solution of Ce-Pr-Ox sol having an average particle size of 60nm. After drying the fibrous catalyst at 120°C for 1 hour and firing at 400°C for 1 hour, the fibrous catalyst of Example 3 was obtained with a thickness of the catalyst layer of 1$\mu$m.

As a first comparative example, $CeO_2$ of 200g and a Boehmite sol of 50g was mixed, added with a solution of nitric acid 10%, and pulverized by a ball mill, thus making a slurry. An average particle size in this case was 3.5$\mu$m. The above-described alumina-silica fiber was impregnated in this slurry, and excessive coat amount is extruded by suction, dried at 120°C for 1 hour and fired at 400°C for 1 hour. Consequently, the fibrous catalyst of comparative example 1 was obtained.

For a second comparative example, the same process was used as was used for the first comparative example except that the ceria sol was not used. The fibrous catalyst of comparative example 2 was obtained.

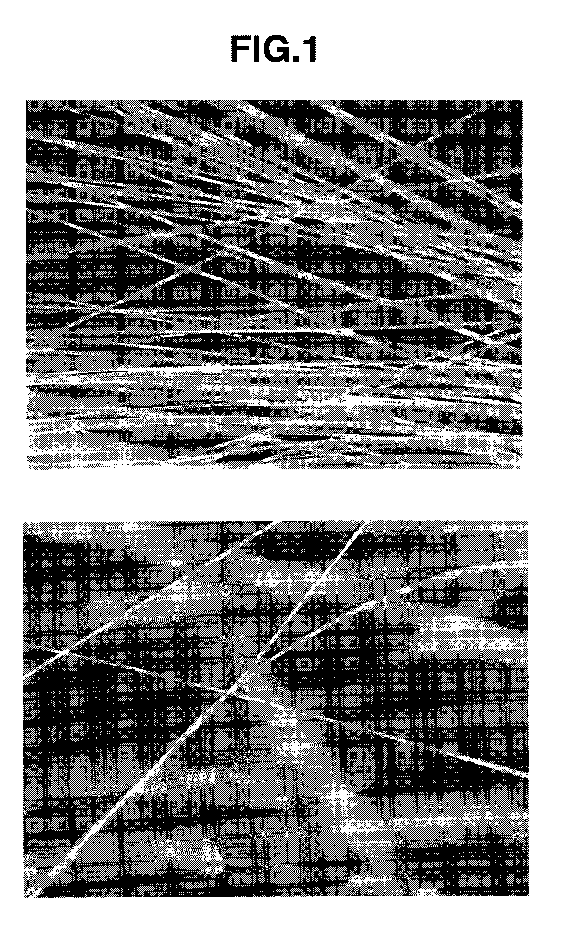

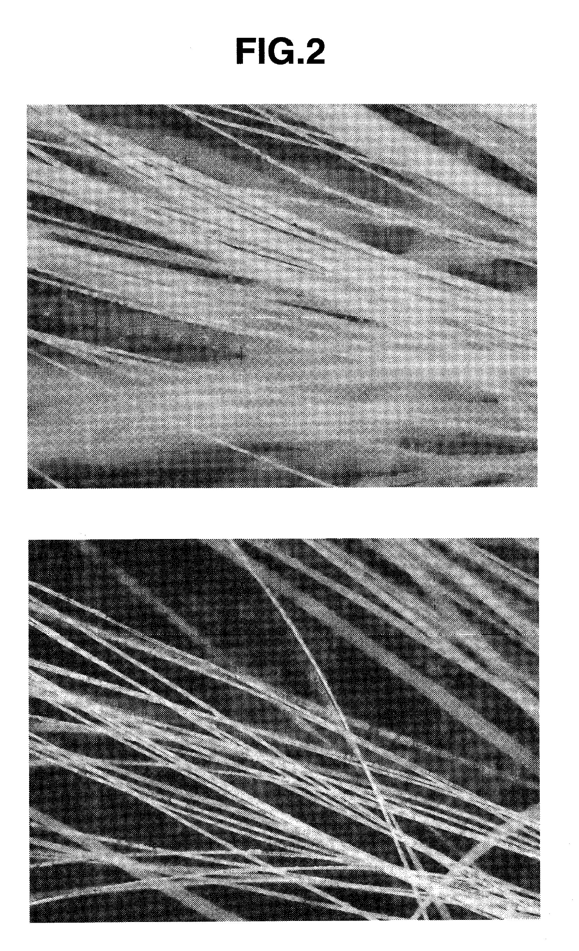

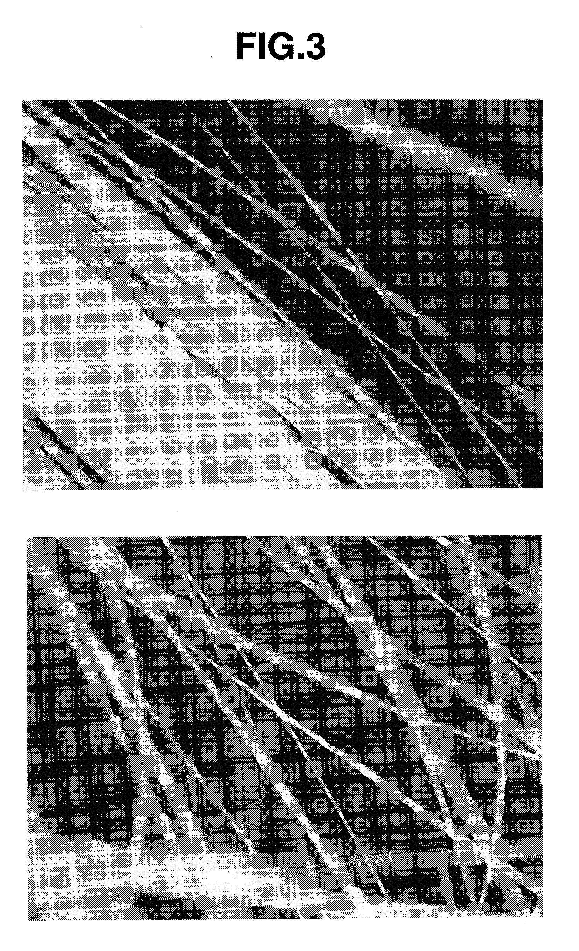

Appearances of the fibrous catalysts obtained by the above-described Examples 1 and 2 and Comparative Example 1 were investigated by electron micrograph. The appearances of the fibrous catalysts are shown, respectively, in FIG. 1, 2 and 3. The electron micrograph revealed that in the fibrous catalyst (Comparative Example 1) using the slurry containing the ceria the particles adhered to the fiber carrier in a lump. The fibrous catalysts according to Examples 1 and 2 using the ceria sol having an average particle size of 5nm were revealed by the micrograph to have no lumps, but rather a consistent coat.

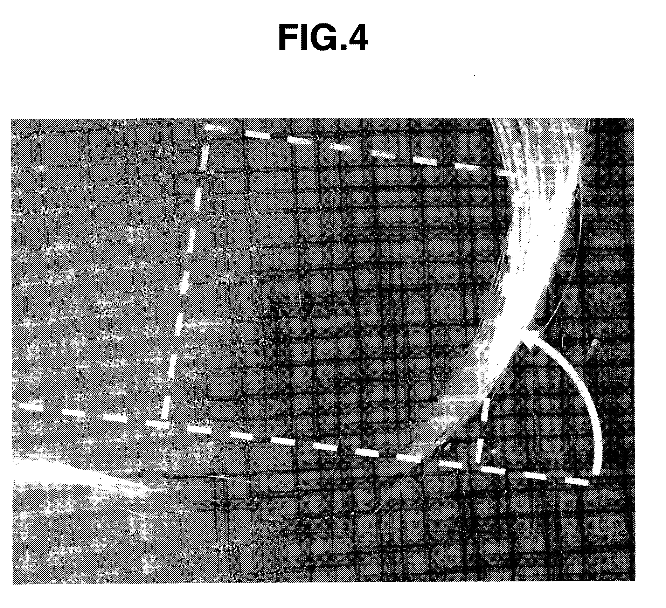

A bending test at a radius of curvature of 10mm and an angle of 90° was performed on the respective fibrous catalysts obtained by Examples 1 and 2 and Comparative example 1 as shown in FIG. 4. Visual observation of the state of the catalyst layers was made after the bend test. These results are shown in Table 1.

Table 1

| Example | Ceramic fiber | Coat solution | Catalyst layer after bending test |
|---|---|---|---|
| Example 1 | | Ceria-sol (5nm size) | Dropping absent |
| Example 2 | Alumina-silica | Ceria-sol (5nm size) + Pt | Dropping absent |
| Example 3 | Length:3.0mm | Ce-Pr-Ox sol (60nm size) | Dropping absent |
| Comparative Example 1 | Raidus:15$\mu$m | Ceria powder (3.5$\mu$m size) | Dropping present |
| Comparative Example 2 | | Pt | Dropping present |

The results show that in the fibrous catalysts in Examples 1 and 2 using the ceria sol having an average particle radius of 5nm and in Example 3 using Ce-Pr-Ox sol having an average particle radius of 60nm, the catalyst layer did not peel off of the fibrous carrier during the bending test, indicating high mechanical strength. On the other hand, Comparative Example 1 using the slurry containing the ceria of an average particle size of 3.5$\mu$m and Comparative Example 2 without the ceria both showed peeling-off of the catalyst layer from the fibrous carrier.

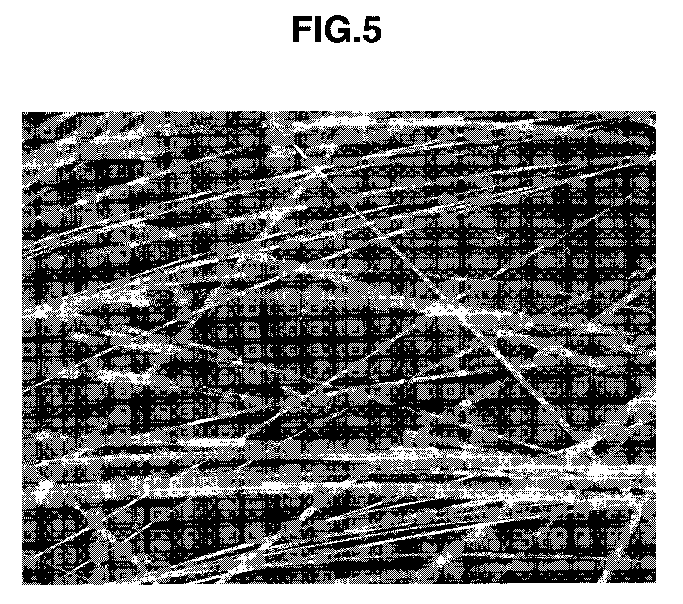

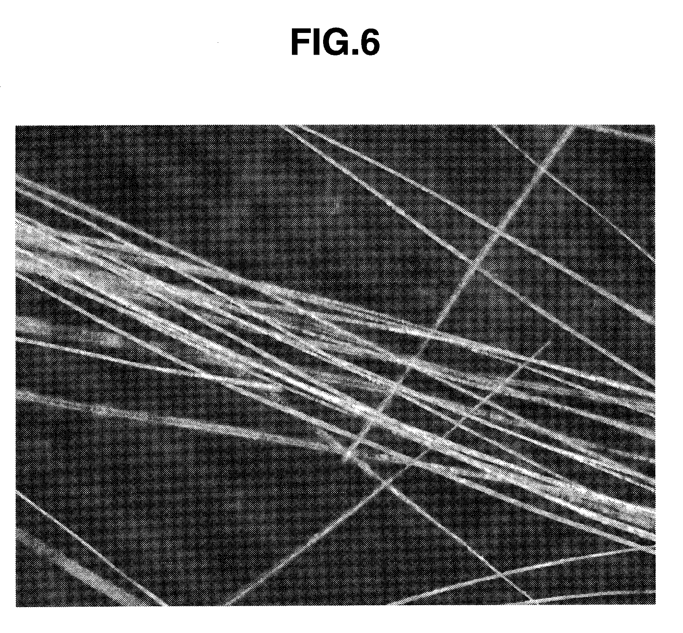

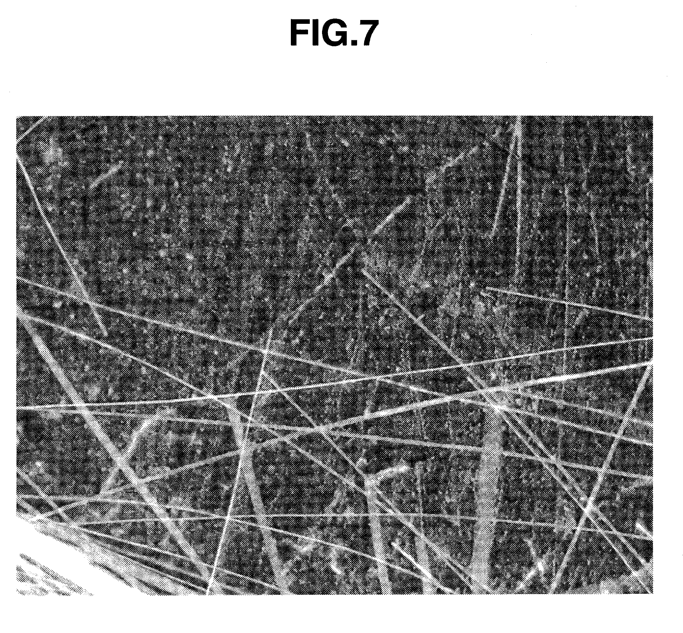

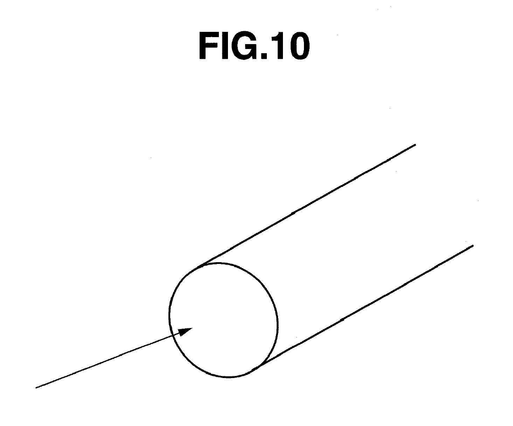

The appearances of the fibrous catalysts after the bending test are shown, respectively, in FIG. 5 (Example 1), FIG. 6 (Example 2) and FIG. 7 (Comparative Example 1). Moreover, as to the fibrous catalysts obtained by the above-described Example 2 and Comparative Example 2, observation results of the cross section of texture by transmission electron microscope from the direction shown in FIG. 10 are shown, respectively, in FIGS. 8 and 9.

In the fibrous catalyst according to Example 2, the nano-size ceria intervenes in the spaces of the ceramic fibers, as shown in FIG. 8. Accordingly, contact interface with the fiber increases, and hydrogen bonds generated between OH of the surface of the fiber and OH of the surface of the ceria increase. Consequently, dropping or peeling of the catalyst layer is prevented. In the fibrous catalyst obtained in Comparative Example 2, the contact interface between the Pt particles and the fibers is increased as shown in FIG. 9. There is little hydrogen bonding with the OH of the surface of the fiber because Pt is metal. Consequently, peeling and dropping of the catalyst layer was not fully prevented.

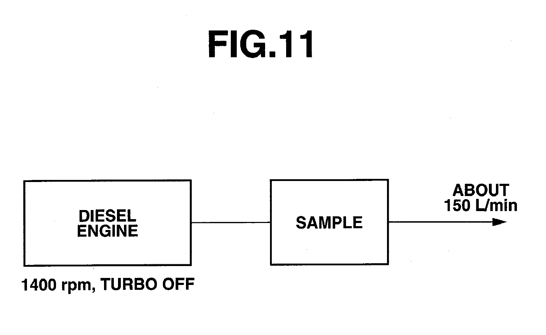

The fibrous catalyst obtained in Example 3 was evaluated by a particulate matter burning test as shown in FIG. 11. The exhaust gas flowed from a diesel engine as shown in FIG. 11. The gas flowed from the start of the supply for 90 minutes.

In the measure of the particulate matter (PM) collection amount, the sample was detached and left in the air at 25°C and a humidity of 60% for 8 hours and more. A first measurement of weight is performed, and then the sample was fired in a muffle furnace at 800°C for 1 hour to remove PM. It was left in the air at 25°C and a humidity of 60% for 8 hours and more, and then a second measurement of weight was performed. The difference between the first measured weight and the second measured weight represents the amount of PM collected. Error of the weight by this measurement is 0.003g.

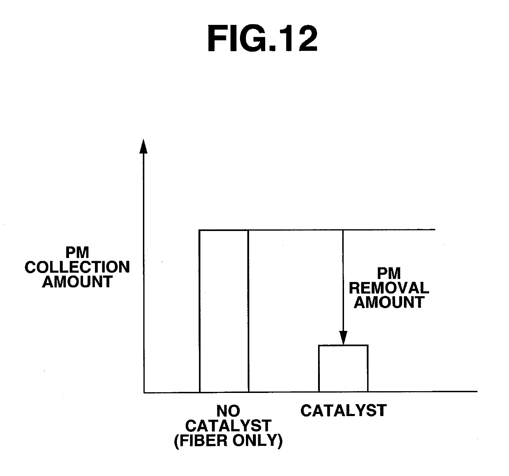

The PM collection amounts obtained by the above-described method were compared in the case of a fiber only with no catalytic layer and in the case of the fibrous catalyst of Example 3 having a catalytic layer formed on the fiber. This difference is represented by a PM removal amount as shown in FIG. 12. The difference is the effect of the catalytic layer. The PM removal rate is calculated as follows:

$$\text{PM removal rate} = \text{PM removal amount} / \text{PM collection amount} * 100.$$

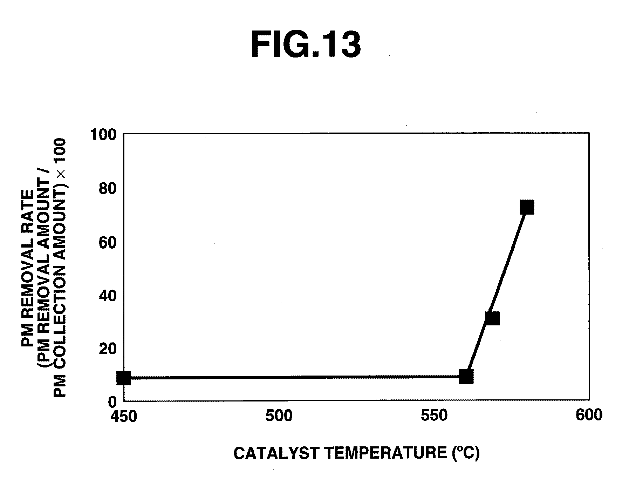

Temperatures of the catalyst were changed to four levels of 450°C, 560°C, 570°C and 580°C, and the above-described measurements were performed. These results are shown in Table 2 and FIG. 13.

Table 2

| Catalyst temperature (°C) | PM collection amount fiber only Wf (g) | PM collection amount by by catalyst of Example 3 Wc (g) | PM removal amount Wf - Wc (g) | PM removal rate 100 (Wf-Wc)/Wf (%) |
|---|---|---|---|---|
| 450 | 0.033 | 0.030 | 0.003 | 9 |

(continued)

| Catalyst temperature (°C) | PM collection amount fiber only Wf (g) | PM collection amount by by catalyst of Example 3 Wc (g) | PM removal amount Wf - Wc (g) | PM removal rate 100 (Wf-Wc)/Wf (%) |
|---|---|---|---|---|
| 560 | 0.024 | 0.022 | 0.002 | 8 |
| 570 | 0.013 | 0.008 | 0.005 | 38.4 |
| 580 | 0.013 | 0.003 | 0.010 | 76.9 |

As these results from the fibrous catalyst obtained in Example 3 show, considering an error range of+- 0.003g, it is not predicated that there is effect. However, the results confirm that large PM removal rates are obtained, largely exceeding the range of the experimental error, between 570°C and 580°C as shown in FIG. 13.

The above-described embodiments have been described in order to allow easy understanding of the invention and do not limit the invention. On the contrary, the invention is intended to cover various modifications and equivalent arrangements included within the scope of the appended claims, which scope is to be accorded the broadest interpretation so as to encompass all such modifications and equivalent structure as is permitted under the law.

This application claims priority from Japanese Patent Application Nos. 2006-325121, filed 1st December 2006, and 2007-197764, filed 30th July 2007, the contents of which are expressly incorporated herein by reference.

**Claims**

1.   A fibrous catalyst comprising:

   a ceramic fiber carrier; and
   a catalyst layer coated on the ceramic fiber carrier;

   wherein the catalyst layer includes ceria-containing particles having an average particle size of between 1nm and 1μm.

2.   A catalyst as claimed in claim 1, wherein the catalyst layer comprises an active catalyst material.

3.   A catalyst according to claim 2 wherein the ceria-containing particles contact the ceramic fiber carrier and are disposed between the ceramic fiber carrier and the active catalyst material, and are disposed between individual particles of the active catalyst material.

4.   A catalyst as claimed in claim 2 or claim 3, wherein the active catalyst material comprises at least one of a noble metal, a transition metal and a rare earth metal.

5.   A catalyst as claimed in any preceding claim, wherein the ceria-containing particles comprise at least one of:

   an inorganic oxide;
   a cerium oxide;
   a ceria-praseodymium; and
   a ceria-manganese.

6.   A catalyst as claimed in any preceding claim, wherein the catalyst layer has an adhesive strength resisting bending to at least a radius of curvature of 10mm and at least a bending angle of 90°.

7.   A catalyst as claimed in any preceding claim, wherein the ceramic fiber carrier comprises an aggregation of fibers.

8.   An exhaust system or a vehicle having a catalyst as claimed in any preceding claim.

9.   A method of preparing a fibrous catalyst to withstand mechanical stresses, the method comprising:

mixing a sol of ceria and active catalyst material;
spraying the sol on a ceramic fiber carrier until an entire surface of the ceramic fiber carrier has an even coat;
drying the coated ceramic fiber carrier; and
firing the ceramic fiber carrier.

**10.** A method as claimed in claim 9 wherein the coat has a thickness of $1\mu$m.

# FIG.1

# FIG.2

# FIG.3

EP 1 927 400 A1

# FIG.4

11

# FIG.5

FIG.6

# FIG.7

FIG.8

# FIG.9

# FIG.10

# FIG.11

DIESEL ENGINE

1400 rpm, TURBO OFF

SAMPLE

ABOUT
150 L/min

# FIG.12

PM
COLLECTION
AMOUNT

PM
REMOVAL
AMOUNT

NO
CATALYST
(FIBER ONLY)

CATALYST

# FIG.13

**European Patent Office**

## EUROPEAN SEARCH REPORT

Application Number

EP 07 12 1893

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 243 335 A (IBIDEN CO LTD [JP]) 25 September 2002 (2002-09-25) * paragraphs [0011], [0014] - [0018], [0023], [0056], [0075], [0081], [0088] - [0093], [0121], [0122]; claims 10,13 * ----- | 1-10 | INV. B01J23/10 B01J23/63 B01J23/83 B01J23/887 B01J35/06 |
| X | WO 2005/120687 A (UMICORE AG & CO KG [DE]; PFEIFER MARCUS [DE]; DOMESLE RAINER [DE]; SOE) 22 December 2005 (2005-12-22) * page 7, lines 22-29; claims 4,6-9,13 * ----- | 1-5,7,8 | |
| A | US 6 548 032 B1 (BARTHE PHILIPPE [FR] ET AL) 15 April 2003 (2003-04-15) * the whole document * ----- | 9,10 | |
| A | WO 2006/119550 A (VERY SMALL PARTICLE COMPANY PT [AU]; ALARCO JOSE ANTONIO [AU]; TALBOT) 16 November 2006 (2006-11-16) * page 8, lines 15-18; claims 14,16,20; example 1 * ----- | 1-5 | |
|  |  |  | TECHNICAL FIELDS SEARCHED (IPC) |
|  |  |  | B01J B01D |

The present search report has been drawn up for all claims

| Place of search | Date of completion of the search | Examiner |
|---|---|---|
| The Hague | 17 March 2008 | Mattheis, Chris |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 12 1893

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2008

| Patent document cited in search report | | Publication date | Patent family member(s) | | Publication date |
|---|---|---|---|---|---|
| EP 1243335 | A | 25-09-2002 | CA 2392216 A1 | | 25-05-2001 |
| | | | WO 0136097 A1 | | 25-05-2001 |
| | | | US 7250385 B1 | | 31-07-2007 |
| WO 2005120687 | A | 22-12-2005 | EP 1768766 A1 | | 04-04-2007 |
| | | | JP 2008501496 T | | 24-01-2008 |
| | | | US 2008026141 A1 | | 31-01-2008 |
| US 6548032 | B1 | 15-04-2003 | NONE | | |
| WO 2006119550 | A | 16-11-2006 | EP 1888234 A1 | | 20-02-2008 |

EPO FORM P0459

For more details about this annex : see Official Journal of the European Patent Office, No. 12/82

**EP 1 927 400 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55155740 A
- JP 2006325121 A
- JP 2007197764 A